# EUROPÄISCHE PATENTSCHRIFT

(11) **EP 1 555 452 B1**
(45) Veröffentlichungstag und Bekanntmachung des Hinweises auf die Patenterteilung: **31.01.2007**
(21) Anmeldenummer: 04030388.5
(22) Anmeldetag: 22.12.2004
(51) Int. Cl.: F16D 25/10, F16D 21/06, F16D 25/08, F16D 23/14

(54) **Stelleinrichtung zur Übertragung von Kolbenkräften auf die Ein-/Ausrückeinrichtung einer Doppelkupplung.**
Actuating device to transmit piston forces to the engag-/disengaging device of a twin clutch.
Dispositif d'actionnement pour transmettre des forces de piston à un dispositif d'en-/dégagement d'un embrayage double.

(30) Priorität: 16.01.2004 DE 102004002344
(43) Veröffentlichungstag der Anmeldung: 20.07.2005
(73) Patentinhaber: LuK Lamellen und Kupplungsbau Beteiligungs KG, 77815 Bühl (DE)
(72) Erfinder: Hans, Dominik, 76461 Muggensturm (DE)

(56) Entgegenhaltungen:
- DE-C1- 19 953 091

## Beschreibung

Die Erfindung betrifft eine Stelleinrichtung zur Übertragung einer Stellkraft einer Ein-/Ausrückeinrichtung auf eine Doppelkupplung zum Kuppeln einer Antriebswelle mit zwei Getriebeeingangswellen.

Stelleinrichtungen zum wechselseitigen Kuppeln der jeweiligen Kupplung einer Antriebswelle mit einer Getriebeeingangswelle sind bereits aus der DE 34 46 460 C2 bekannt, bei der jeweils eine Kupplung mit einer Tellerfeder von je einem mit der betreffenden Tellerfeder verbundenem Stellmechanismus mit einem zur Kupplungsachse koaxial liegenden Ringkolben ausgerückt wird. Die beiden Ringkolben sind dabei im Gehäuse radial voneinander beabstandet.

Eine weitere Möglichkeit, eine Antriebswelle mit einer Getriebeeingangswelle über wechselseitiges Kuppeln der jeweiligen Kupplung einer Doppelkupplung in Eingriff zu bringen und dabei die Hystereseeigenschaften der vorgenannten Lösung zu verbessern, wird in der DE 199 53 091 C1 beschrieben. Hierbei wird die hydraulische Fläche der zwei koaxial zur Kupplungsachse liegenden Ringkolben, wie sie die DE 34 46 460 C2 offenbart, ersetzt durch mehrere Teilflächen, die sich aus den Druckflächen stangenförmig ausgebildeter Einzelkolben ergeben. Diese Einzelkolben, hier als Stellmotore bezeichnet, werden bei Betätigung mit Druckmittel beaufschlagt. Jeder Kupplung sind dabei drei mit ihrer Achse parallel zur Kupplungsachse angeordnete Stellmotoren zugeordnet. Alle 6 Stellmotoren liegen auf einem zur Kupplungsachse koaxial verlaufendem Teilkreis, wobei die jeweils 3 einer Kupplung zugeordneten Stellkolben um jeweils 120° zueinander angeordnet sind und im Betriebszustand immer synchron mit Druck beaufschlagt werden.

Diese Lösungen haben jedoch den Nachteil, dass die Druckbeaufschlagung eines Kolbens bzw. eines Kolbensystems (bestehend aus drei Kolben) nie zentrisch für jeden einzelnen Kolben erfolgt, so dass jeder immer nur exzentrisch mit Druck beaufschlagt wird. Das führt zum Verkippen der Kolben gegenüber ihrer Lauffläche im Zylinder, damit zu erhöhter Reibung und letztendlich zu Verschleiß der Kolben und deren Laufflächen.

Außerdem sind die Kolben in ihrer Länge der entsprechenden Lauffläche und damit der Länge der Zylinder angepasst, was das Gewicht der Ein-/Ausrückeinrichtung negativ beeinflusst.

Weiterhin sind bei der DE 199 53 091 C1 die drei Kolben mechanisch nicht miteinander gekoppelt, so dass bei unterschiedlich hohen Druckkräften jeder Kolben unterschiedlich weit ausfährt. Dies führt zu einer Verkippung des Lagers und damit zu dessen Kollision mit dem Gehäuse. Von Nachteil ist weiterhin die direkte Anbindung der drei Kolben an das jeweilige Lager. Das führt zu einer punktförmigen Belastung des Lagers und damit zur Herabsetzung der Lebensdauer des Lagers.

Daher ist es Aufgabe der Erfindung, unter Beibehaltung einer vorgegebenen Bauraumgröße eine Ein-/Ausrückeinrichtung vorzuschlagen, mit der eine zentrische und axial geführte Übertragung hoher Druckkräfte bei kleiner Dimensionierung der Kolben auf den Lagerring des jeweiligen Ausrücklagers bzw. die zugeordnete Kupplung realisierbar ist.

Diese Aufgabe wird mit den Merkmalen des Patentanspruchs 1 in vorteilhafter Weise gelöst, indem die Druckflächen der Kolben der jeweils zugeordneten Kupplung miteinander koppelbar sind und die Führungsbahn der Kolben verlängerbar ist.

Dazu stehen in vorteilhafter Weise mindestens zwei konzentrisch um die Achse der Ein-/Ausrückeinrichtung zwischen dem äußeren zylindrischen Grundkörperteil und dem inneren zylindrischen Grundkörperteil angeordnete Ringe in Wirkverbindung mit jeweils mindestens zwei um diese Achse auf einem Teilkreis angeordneten Kolben. Besonders vorteilhaft ist es immer, drei Kolben für die Betätigung einer Kupplung vorzusehen, die jeweils um 120° zueinander versetzt angeordnet sind, damit bereits bei der Krafteinleitung in den Ring eine möglichst gleichmäßige Anlage an diesem gewährleistet ist. Die jeweils drei für eine Kupplung über den Teilkreisdurchmesser um 120° zueinander versetzt angeordneten Kolben können zu den anderen drei der zweiten Kupplung zugehörigen Kolben beliebig versetzt auf dem Teilkreisdurchmesser angeordnet werden.

Die Koppelung der Druckflächen für ein Ausrücklager erfolgt dadurch, indem die Druckflächen der drei für die jeweilige Kupplung zuständigen Kolben über einen Adapter in Form eines Rings miteinander verbunden werden. Dieser steht über so genannte Fortsätze in unmittelbarer Verbindung mit jedem einzelnen Kolben, die dadurch indirekt miteinander verbunden werden.

Diese Lösung ermöglicht, dass der Druck synchron über vorgesehene Anschlüsse in der Bodenplatte des Grundkörpers der Ein-/Ausrückeinrichtung eingeleitet wird, der auf jeden der drei Kolben zentrisch wirkt. Da die Kolben und der jeweilige Lagerring nicht auf einer Wirkungslinie liegen, wird dieser Versatz durch den zugehörigen Ring ausgeglichen.
Die Weitergabe der Druckkraft erfolgt somit nicht direkt über die jeweiligen Kolbenflächen auf einen Lagerring, sondern über die Stirn-(Druck)fläche des entsprechenden Rings. Umgekehrt werden von der Kupplung herrührende Belastungsunterschiede über den Ring ausgeglichen und die einzelnen Kolben werden in ihrer Führungsbahn nicht verkantet. Das führt wiederum dazu, dass Verschleiß sowohl an der Führungsbahn als auch am Kolben vermieden wird.

Auf diese Weise wird die Ausrückkraft gleichmäßig auf den Lagerring des Ausrücklagers übertragen. Diese gleichmäßige Kraftverteilung wird außerdem ermöglicht durch die konzentrische Anordnung der Ringe um die Achse der Ein-/Ausrückeinrichtung und deren senkrecht zu dieser verlaufenden Ebenen der Druckflächen.

Ein weiterer Vorteil der erfinderischen Lösung besteht darin, dass der innere Ring auf dem inneren zylindrischen Grundkörperteil gegenüber dem äußeren Ring und der äußere Ring am äußeren Durchmesser des zylindrischen Grundkörperteils geführt wird und axial verschiebbar ist.
Eine weitere Möglichkeit wäre auch, dass der äußere Ring auf dem inneren Ring gegenüber dem äußeren zylindrischen Grundkörperteils axial verschiebbar ist.
Dadurch wird erreicht, dass beispielsweise das äußere Ausrücklager gegenüber dem inneren Ausrücklager unabhängig von diesem axial mittels des entsprechenden Rings verschiebbar ist

Die Kraftübertragung erfolgt vorteilhafterweise über mindestens jeweils zwei an den Stirnseiten der kolbenseitigen Enden der Ringe in axialer Richtung angebrachte Fortsätze. Durch die Anpassung der Durchmesser der beiden Ringe wird erreicht, dass der Versatz von Kolben zu Ring gleich groß ist. Die 6 Fortsätze werden somit alle gleichmäßig belastet.
Da, wie bereits erwähnt, jeweils von drei Kolben die Kraft auf eine Kupplung übertragen wird, müssen die Ringe jeweils ebenfalls mit drei Fortsätzen versehen sein. Diese sind wiederum um 120° zueinander versetzt angeordnet und haben alle die gleiche Länge. Das hat den Vorteil, dass im drucklosen Zustand der Ein-/Ausrückeinrichtung, sowohl die Kolben an der Bodenplatte des Grundkörpers als auch alle 6 Fortsätze an den 6 Kolbenflächen anliegen. Dabei nehmen die beiden Ringe eine Ausgangsposition ein, in der die kolbenseitigen Stirnflächen in einer Ebene liegen. Diese Ausgangsstellung kann beispielsweise als Referenzpunkt für eine Justierung der Ringe bzw. der Lagerringe für jedes Ausrücklager zur Tellerfeder der jeweiligen Kupplung genutzt werden.

Sowohl für die axiale Führung beider Ringe innerhalb des Grundköpers bzw. der Ringe zueinander als auch für die Auslegung der jeweils erforderlichen Führungsfläche ist es weiterhin besonders vorteilhaft, dass an den kolbenseitigen Stirnseiten beider Ringe wiederum drei am Umfang angeordnete Ausnehmungen gleicher Größe vorgesehen sind, die sich in axialer Richtung über die Breite des jeweiligen Rings erstrecken, wobei immer im Wechsel nach einer Ausnehmung ein Fortsatz folgt.

Bei der Paarung der Ringe korrespondiert immer beispielsweise eine Ausnehmung des inneren Rings mit einem Fortsatz des äußeren Rings. Diesem Prinzip folgend stehen die Fortsätze des inneren Rings mit den Ausnehmungen des äußeren Rings in Verbindung. Durch diese konstruktive Ausbildung können die Fortsätze massiv ausgebildet werden, was für die Übertragung hoher Kräfte sehr vorteilhaft ist und die Werkstoffbelastung verringert.

Ein weiterer Vorteil der erfindungsgemäßen Lösung besteht darin, dass die Fortsätze der Ringe in zylindrischen Stempeln enden, die eine möglichst verlustfreie Kraftübertragung garantieren. Außerdem fluchten die Symmetrieachsen der Paarungselemente mit denen der Kolben, was ebenfalls für eine optimale Kraftübertragung vom Kolben auf den entsprechenden Ring Voraussetzung ist und damit eine Verkippung der Kolben in ihren Führungsbahnen ausschließt. Dadurch wird ebenfalls eine zusätzliche Reibung vermieden und somit die Lebensdauer der Ein-/Ausrückeinrichtung verlängert.

Die Grundlage für die möglichst verlustfreie Kraftübertragung wird gemäß der Erfindung dadurch geschaffen, dass die Kolben hohl ausgeführt sind und damit die Druckflächen ins Innere des einzelnen Kolbens verlegt werden. Im Innern der Kolben bildet die Druckfläche am Ende einer zylindrischen Ausnehmung den Abschluss des Hohlraums. Mit der zylindrischen Ausnehmung wird gleichzeitig eine axiale Führung für die an der Druckfläche anliegenden Stempel der Fortsätze des jeweiligen Rings erreicht.

Vorteilhaft ist es außerdem, unter Berücksichtigung der Größe der auftretenden Kräfte alle miteinander in Verbindung stehenden Teile, wie den Grundkörper, die Ringe Kolben aus einem gießbaren Material herzustellen. Auf diese Weise können spanende Bearbeitungsschritte entfallen, was zu einer Zeit- und Materialeinsparung führt und letztendlich die Herstellungskosten erheblich senkt.

Die Erfindung soll nachfolgend an einem Ausführungsbeispiel näher erläutert werden.

Es zeigen:
- Fig. 1: eine räumliche Ansicht einer erfindungsgemäßen Ein-/Ausrückeinrichtung in Explosionsdarstellung,
- Fig. 2: einen Kolben,
- Fig. 3: einen Schnitt durch eine erfindungsgemäße Ein-/Ausrückeinrichtung,
- Fig. 4a: einen Teilschnitt durch die Ein-/Ausrückeinrichtung gemäß Fig. 3, wobei die Kolben 3a mit Druck beaufschlagt sind und der Ring 4a ausgerückt ist,
- Fig. 4b: einen Teilschnitt gemäß Fig. 3, wobei sich der Ring 4a und somit auch die Kolben 3a sich in ihrer Ausgangstellung befinden,
- Fig. 5a: einen Teilschnitt durch den Nehmerzylinder gemäß Fig. 3, wobei die Kolben 3b mit Druck beaufschlagt sind und der Ring 4b ausgerückt ist,
- Fig. 5b: einen Teilschnitt gemäß Fig. 3, wobei sich der Ring 4b und somit auch die Kolben 3b sich in ihrer Ausgangstellung befinden,
- Fig. 6: Druckflächen der Ringe 4a und 4b (Ringe im eingebauten Zustand)

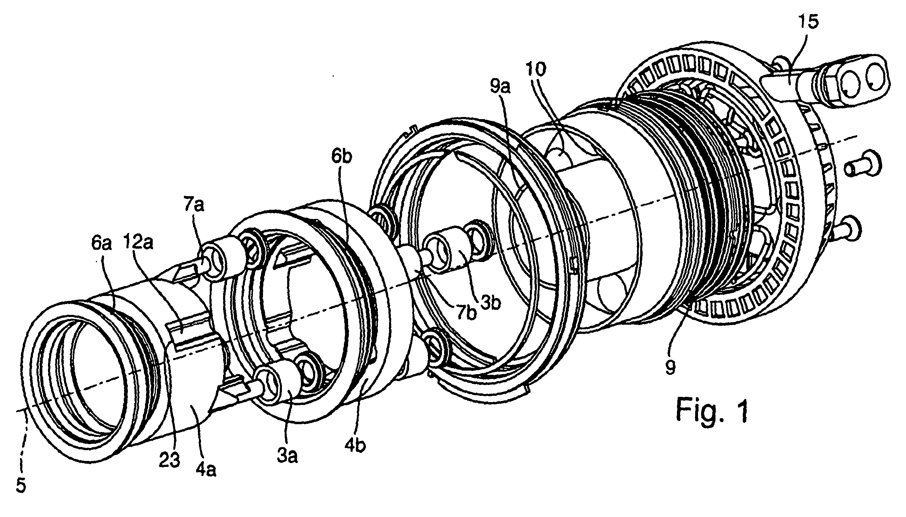

Die Ein-/Ausrückvorrichtung bzw. der Nehmerzylinder besteht gemäß Figur 1 im Wesentlichen aus einem doppelzylindrischen Grundkörper 9 mit einem inneren zylindrischen Grundkörperteil 9a und einem äußeren zylindrischen Grundkörperteil 9b, der nach einer Seite hin offen ist, wobei das innere zylindrische Grundkörperteil 9a längenmäßig über das äußere zylindrische Grundkörperteil 9b hinausragt. Die andere Seite des Grundkörpers 9 ist durch eine Bodenplatte 9c verschlossen. In diese Bodenplatte 9c sind im Zwischenraum zwischen äußerem zylindrischen Grundkörperteil 9b und innerem zylindrischem Grundkörperteil 9a 6 Grundlochbohrungen 10 eingebracht. Diese Grundlochbohrungen 10 weisen wiederum jeweils eine Durchgangsbohrung für einen Fluidanschluss für die Druckmittelzufuhr 15 auf.

Die Grundlochbohrungen 10 sind auf einem konzentrischen Teilkreis 2 angeordnet und jeweils in einem Winkel von 60° voneinander beabstandet. Die Stärke der Bodenplatte 9c des Grundkörpers 9 richtet sich im Wesentlichen nach der Länge der Führung und die Größe des Durchmessers der einzelnen Grundlochbohrung 10 nach dem darin aufzunehmenden Kolben 3a, 3b. Vorteilhafter Weise werden gleiche Durchmessergrößen der 6 Grundlochbohrungen 10 gewählt und zur maximalen Raumausnutzung diese vom Abstand zwischen äußerem zylindrischen Grundkörperteil 9b und innerem zylindrischen Grundkörperteil 9a bestimmt. Die Durchmesser der Kolben 3a, 3b sind damit entsprechend ebenfalls gleich groß.

Jede Grundlochbohrung 10 stellt einen Zylinder für den jeweiligen Kolben 3a, 3b dar und dient zu dessen Aufnahme.

In diesem Grundkörper 9 werden die Ringe 4a und 4b zwischen dem inneren zylindrischen Grundkörperteil 9a und dem äußeren zylindrischen Grundkörperteil 9b aufgenommen und geführt. Aus dieser Figur ist ebenfalls ersichtlich, dass am kolbenseitigen Ende der Ringe 4a, 4b, Fortsätze 7a, 7b angebracht sind, deren Füße teilweise die Mantelfläche des jeweiligen Rings 4a, 4b überragen. Gleichzeitig ist erkennbar, dass diese Fortsätze 7a, 7b in zylindrischen Stempeln 16a, 16b enden. Da die Fortsätze 7a, 7b einerseits zur axialen Bewegung innerhalb des Grundkörpers 9 und damit zur Kraftübertragung von den Kolben auf die Lagerringe dienen und dafür für hohe Drücke eine bestimmte Stabilität aufweisen müssen, ist deren Querschnitt entsprechend auszulegen. Andererseits wird durch sie eine Verringerung der Breite der Ringe 4a, 4b bzw. eine Verlängerung der Ausrückfläche möglich. Diesen beiden Funktionen gerecht zu werden und außerdem den Bauraum nicht zu vergrößern, werden die Fortsätze 7a, 7b in deren Form angepassten Ausnehmungen 12a, 12b vom jeweils anderen Ring 4b, 4a aufgenommen. Um dem geringen Raumangebot Rechnung zu tragen, sind die Fortsätze 7a, 7b so gestaltet, dass sie einen entsprechend starken Fuß aufweisen, der hauptsächlich an der kolbenseitigen Stirnseite des Rings 4a, 4b angebracht ist. Dieser Fuß wird von einem zylindrischen Stempel 16a, 16b abgelöst, dessen Symmetrieachse auf dem Durchmesser des Rings 4a, 4b liegt. Zur Erhöhung der Festigkeit der Fortsätze 7a, 7b bei gleichzeitig optimaler Auslegung der Druckfläche wird der jeweils der Kontaktfläche zugewandte Teil des Stempels 16a, 16b über den Fuß des Fortsatzes 7a, 7b hinaus verlängert und reicht auf einer Länge, die der Länge des Fortsatzes 7a, 7b des kontaktierten Rings 4a, 4b entspricht, in den Innenumfang des Rings 4a, 4b hinein.

Die Stempel 16a, 16b mit einer Länge und mit einem Durchmesser, die in vorteilhafter Weise der axialen Ausdehnung und dem Durchmesser, die den Abmessungen des zylindrischen Hohlraums eines Kolbens 3a, 3b entsprechen, stehen mit ihren Stirnflächen mit den Druckflächen 19, 20 der Kolben 3a, 3b in Kontakt.

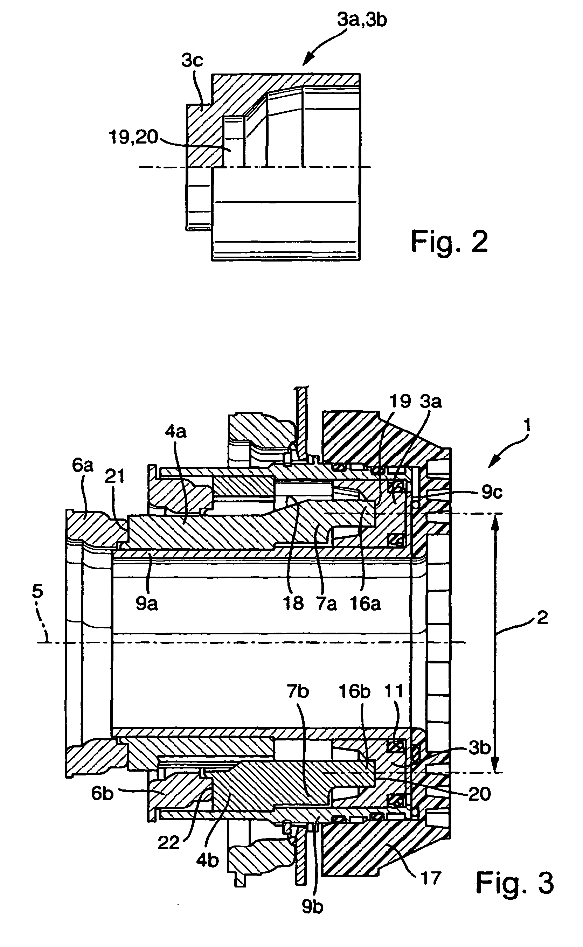

Die besondere Gestaltung eines Kolbens 3a, 3b geht aus der Figur 2 hervor. Jeder Kolben 3a, 3b ist mit einem Ansatz 3c versehen, mit dem er axial an der Bodenplatte 9c anliegt und der gleichzeitig zur Aufnahme einer Dichtung 11 dient, dass das sich im Zylinder 10 befindende Fluid nicht in den diesen umgebenden Grundkörper 9 gelangen kann.

Wird die Ein-/Ausrückvorrichtung 1 durch Fluid mit Druck beaufschlagt, wird dieser über die in der Bodenplatte 9c des Grundkörpers 9 vorgesehenen Bohrungen auf die der entsprechenden Kupplung zugeordneten drei Kolben 3a oder 3b übertragen. Dadurch werden die Kolben 3a oder 3b in ihren Zylindern 10 axial in Richtung Ausrücklager 6a, 6b bewegt.

Wie bereits erwähnt, sind die Ringe 4a, 4b über entsprechend vorgesehene kolbenförmige Fortsätze 7a, 7b, die in zylinderförmige Stempel 16a und 16b übergehen, mit den jeweils zugeordneten Kolben 3a, 3b kontaktierbar und spielbehaftet axial ineinander verschiebbar. Auf diese Weise sind die Kolben 3a bzw. 3b indirekt miteinander verbunden. Weiterhin sind beispielsweise den Fortsätzen 7b am Ring 4b die Ausnehmungen 12a des Ringes 4a zugeordnet. Entsprechend sind die Führungsflächen der Ausnehmungen 12b des Ringes 4b den Fortsätzen des Ringes 4a zugeordnet.

Die Ausnehmungen 12a des Ringes 4a weisen gegenüber dem Ring 4b die Besonderheit auf, dass sie nicht über die gesamte Breite des Ringes 4a verlaufen, sondern vor dem Ende, das an dem Lagerring 6a anliegt.

Bei Druckbeaufschlagung der entsprechenden drei Kolben 3a bzw. 3b drücken diese gleichzeitig auf die jeweiligen Fortsätze 7a oder 7b, wodurch der Ring 4a bzw. der Ring 4b mit dem Ausrücklager 6a oder 6b ein- oder ausgerückt und damit die entsprechende Kupplung betätigt wird.

Die Figur 3 zeigt eine Ein-/Ausrückeinrichtung 1 in der Ausgangsstellung, d. h. ohne Druckbeaufschlagung der Kolben 3a, 3b. In dieser Figur sind auch die beiden Fortsätze 7a und 7b erkennbar, die in den Stempeln 16a und 16b enden, die in dieser Stellung an den Druckflächen 19, 20 der Kolben 3a und 3b anliegen.

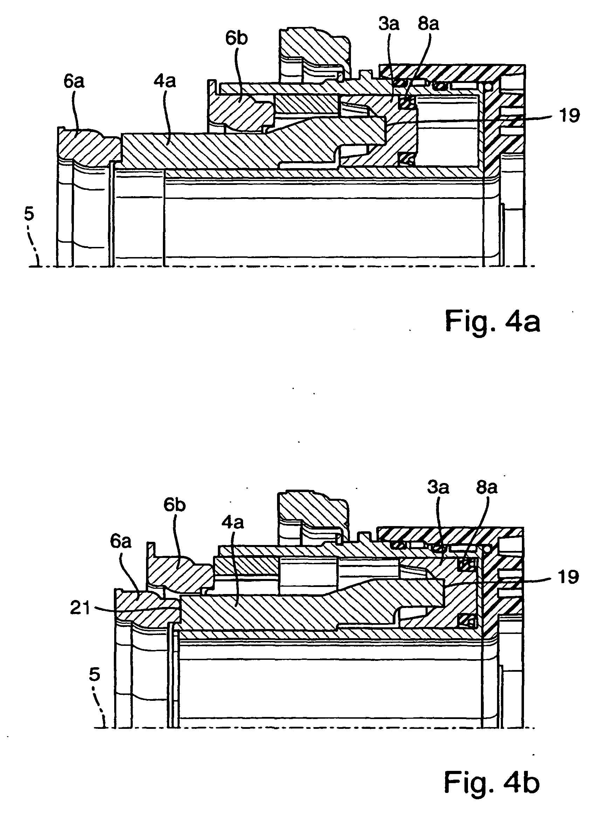

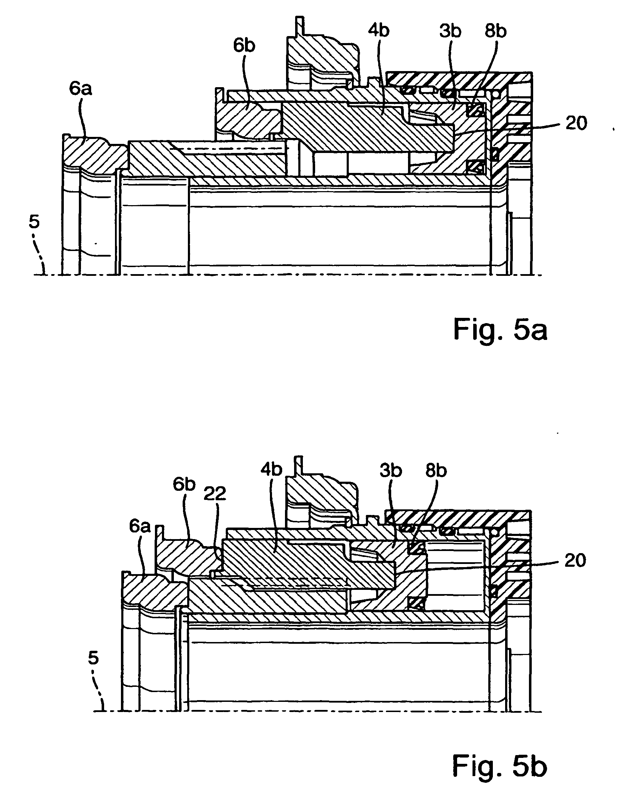

Die Figur 4a zeigt einen der drei der konzentrisch um den Teilkreis 2 angeordneten Kolben 3a im ausgerückten und die Figur 4b entsprechend im eingerückten Zustand. Die Figuren 5a und 5b verdeutlichen die Funktionsweise der Ein-/Ausrückeinrichtung 1 für die Kolben 3b entsprechend.

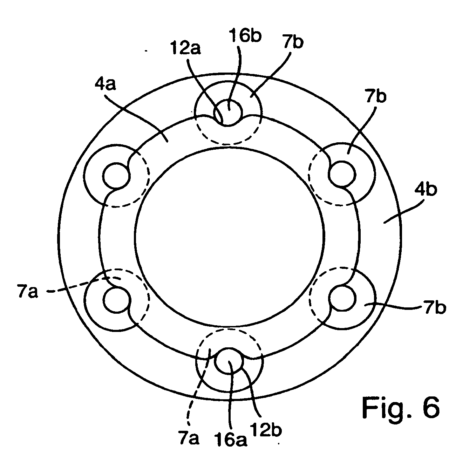

Die Figur 6 zeigt die Anordnung der Druckflächen der beiden Ringe 4a und 4b im eingebauten Zustand. Hieraus ist erkennbar, dass die Druckkraft unabhängig von der Wahl der mit Druck beaufschlagten Kolben 3a oder 3b axial immer über den gedachten Teilkreisdurchmesser 2 der Fortsätze 7a bzw. 7b, der mit dem Teilkreisdurchmesser der Kolben 3a bzw. 3b fluchtet, übertragen wird. Dadurch wird eine weitestgehend verlustfreie Übertragung der Druckkraft von den Kolben 3a bzw. 3b auf die Ringe 4a bzw. 4b gewährleistet.

### Bezugszeichenliste

- 1: Ein-/Ausrückvorrichtung / Nehmerzylinder
- 2: Konzentrischer Teilkreis
- 3a: Kolben
- 3b: Kolben
- 3c: Ansatz
- 4a: innerer Ring
- 4b: äußerer Ring
- 5: Achse der Ein-/Ausrückvorrichtung
- 6a: inneres Ausrücklager
- 6b: äußeres Ausrücklager
- 7a: Fortsätze
- 7b: Fortsätze
- 8a: Dichtungen
- 8b: Dichtungen
- 9: Grundkörper
- 9a: inneres zylindrisches Grundkörperteil
- 9b: äußeres zylindrisches Grundkörperteil
- 9c: Bodenplatte
- 10: Grundlochbohrung, Zylinder
- 11: Dichtung
- 12a: Ausnehmung
- 12b: Ausnehmung
- 15: Druckmittelzufuhr
- 16a: Stempel
- 16b: Stempel
- 17: Gehäuse
- 18: Schräge
- 19: Druckfläche Kolben 3a
- 20: Druckfläche Kolben 3b
- 21: Stirnfläche des Rings 4a
- 22: Stirnfläche des Rings 4b
- 23: Anschlag

## Patentansprüche

1. Stelleinrichtung zur Übertragung einer Stellkraft einer Ein-/Ausrückeinrichtung (1) auf eine Doppelkupplung mit mindestens für jede Kupplung zwei parallel zur Kupplungsachse bzw. zur Achse (5) der Ein-/Ausrückeinrichtung (1) angeordneten mit Druck beaufschlagbare Kolben (3a, 3b), die auf einem zur Achse (5) konzentrischen Teilkreis (2) angeordnet sind, **dadurch gekennzeichnet, dass** die Druckflächen (19) der Kolben (3a) jeweils miteinander und die Druckflächen (20) der Kolben (3b) jeweils miteinander mechanisch koppelbar sind und die Führungsbahn der Kolben (3a, 3b) verlängerbar ist.

2. Stelleinrichtung nach Anspruch 1, **dadurch gekennzeichnet, dass** mindestens zwei konzentrisch um die Achse (5) zwischen dem äußeren zylindrischen Grundkörperteil (9b) und dem inneren zylindrischen Grundkörperteil (9a) angeordnete Ringe (4a, 4b) in Wirkverbindung mit mindestens zwei um die Achse (5) auf dem Teilkreis (2) angeordneten Kolben (3a, 3b) stehen.

3. Stelleinrichtung nach Anspruch 2, **dadurch gekennzeichnet, dass** der Ring (4a) auf dem inneren zylindrischen Grundkörperteil (9a) gegenüber dem Ring (4b) und der Ring (4b) auf dem äußeren zylindrischen Grundkörperteil (9b) gegenüber dem inneren Ring 4a axial verschiebbar ist.

4. Stelleinrichtung nach den Ansprüchen 1 bis 3, **dadurch gekennzeichnet, dass** der Ring (4a) mit seiner Stirnfläche (21) mit dem Ausrücklager (6a) und der Ring (4b) mit seiner Stirnfläche (22) mit dem Ausrücklager (6b) in Verbindung steht und die Ebenen der Stirnflächen (21, 22) senkrecht zur Achse (5) der Ein-/Ausrückeinrichtung (1) verlaufen.

5. Stelleinrichtung nach den Ansprüchen 1 bis 4, **dadurch gekennzeichnet, dass** eine größenmäßige Abhängigkeit besteht zwischen dem Innendurchmesser des Ringes (4b) bzw. dem Außendurchmesser des Ringes (4a) und dem Durchmesser des Teilkreises (2)..

6. Stelleinrichtung nach den Ansprüchen 1 bis 5, **dadurch gekennzeichnet, dass** die Stirnseiten der kolbenseitigen Enden der Ringe (4a, 4b) mindestens jeweils zwei Fortsätze (7a, 7b) in axialer Richtung aufweisen, wobei deren endseitiger Teil von zylindrischen Stempeln (16a, 16b) gebildet wird und die Fortsätze (7a, 7b) gleiche Längen aufweisen.

7. Stelleinrichtung nach den Ansprüchen 1 bis 6, **dadurch gekennzeichnet, dass** an den kolbenseitigen Stirnseiten der Ringe (4a, 4b) mindestens zwei am Umfang angeordnete Ausnehmungen (12a, 12b) vorgesehen sind, die in axialer Richtung sich über die Breite der Ringe (4a, 4b) erstrecken, wobei jeweils nach einer Ausnehmung (12a, 12b) ein Fortsatz (7a, 7b) folgt.

8. Stelleinrichtung nach Anspruch 7, **dadurch gekennzeichnet, dass** die Fortsätze (7b) des Rings (4b) lagemäßig mit den Ausnehmungen (12a) des Rings (4a) korrespondieren und in diesen axial bewegbar sind.

9. Stelleinrichtung nach den Ansprüchen 6 bis 8, **dadurch gekennzeichnet, dass** die Symmetrieachsen der Stempel (16a, 16b) der Fortsätze (7a, 7b) mit denen der Ausnehmungen (12a, 12b) und denen der Kolben (3a, 3b) fluchten.

10. Stelleinrichtung nach den Ansprüchen 1, 6 und 9, **dadurch gekennzeichnet, dass** die Kolben (3a, 3b) hohl ausgeführt sind und die Stempel (16a, 16b) mit den inneren Kolbenflächen (19, 20) in Verbindung stehen.

11. Stelleinrichtung nach einem der Ansprüche 2 bis 10, **dadurch gekennzeichnet, dass** die Gesamtbreite der Ringe (4a) und (4b) mit dem Durchmesser eines Kolbens (3a, 3b) korrespondiert.

12. Stelleinrichtung nach den Ansprüchen 2 bis 11, **dadurch gekennzeichnet, dass** der Grundkörper (9), die Ringe (4a, 4b) und die Kolben (3a, 3b) aus einem gießbaren Material herstellbar sind.

## Claims

1. A regulating mechanism for transmitting a regulating power of an engaging/disengaging apparatus (1) to a dual clutch, having at least two pressurizable pistons (3a, 3b) for each clutch positioned parallel to the clutch axis or to the axis (5) of the engaging/ disengaging apparatus (1), which pistons are located on a graduated circle (2) which is concentric to the axis (5), **characterized in that** the pressure surfaces (19) of the pistons (3a) can be coupled with each other and the pressure surfaces (20) of the pistons (3b) can be coupled mechanically with each other, and the guide way of the pistons (3a, 3b) can be lengthened.

2. The regulating mechanism according to Claim 1, **characterized in that** at least two rings (4a, 4b) positioned concentrically around the axis (5) between the outer cylindrical body piece (9b) and the inner cylindrical body piece (9a) have a working connection with at least two pistons (3a, 3b) that are positioned around the axis (5) on the graduated circle (2).

3. The regulating mechanism according to Claim 2, **characterized in that** the ring (4a) on the inner cylindrical body piece (9a) is axially movable relative to the ring (4b), and the ring (4b) on the outer cylindrical body piece (9b) is axially movable relative to the inner ring (4a).

4. The regulating mechanism according to Claims 1 through 3, **characterized in that** the face (21) of the ring (4a) is in contact with the clutch release bearing (6a) and the face (22) of ring (4b) is in contact with clutch release bearing (6b), and the planes of the faces (21, 22) run perpendicular to the axis (5) of the engaging/disengaging apparatus (1).

5. The regulating mechanism according to Claims 1 through 4, **characterized in that** a size-based dependency exists between the inner diameter of the ring (4b) or the outer diameter of the ring (4a) and the diameter of the graduated circle (2).

6. The regulating mechanism according to Claims 1 through 5, **characterized in that** the end faces of the rings (4a, 4b) on the piston side each have at least two projections (7a, 7b) in the axial direction, their end parts being formed of cylindrical plungers (16a, 16b) and the projections (7a, 7b) being of equal length.

7. The regulating mechanism according to Claims 1 through 6, **characterized in that** on the faces of the rings (4a, 4b) on the piston side there are at least two recesses (12a, 12b) positioned on the circumference, which extend over the width of the rings (4a, 4b) in the axial direction, each recess (12a, 12b) being followed by a projection (7a, 7b).

8. The regulating mechanism according to Claim 7, **characterized in that** the projections (7b) of the ring (4b) correspond in position to the recesses (12a) of ring (4a) and are axially movable in them.

9. The regulating mechanism according to Claims 6 through 8, **characterized in that** the axes of symmetry of the plungers (16a, 16b) of the projections (7a, 7b) are aligned with those of the recesses (12a, 12b) and those of the pistons (3a, 3b).

10. The regulating mechanism according to Claims 1, 6 and 9, **characterized in that** the pistons (3a, 3b) are hollow, and the plungers (16a, 16b) are in contact with the inner piston surfaces (19, 20).

11. The regulating mechanism according to one of Claims 2 through 10, **characterized in that** the total width of the rings (4a) and (4b) corresponds to the diameter of a piston (3a, 3b).

12. The regulating mechanism according to Claims 2 through 11, **characterized in that** the body (9), the rings (4a, 4b) and the pistons (3a, 3b) can be produced from a castable material.

## Revendications

1. Dispositif d'actionnement pour la transmission d'une force d'actionnement d'un dispositif de débrayage/embrayage (1) à un embrayage double, avec pour chaque embrayage au moins deux pistons (3a, 3b) disposés parallèlement à l'axe d'embrayage et à l'axe (5) du dispositif de débrayage/embrayage (1), qui peuvent être sollicités en pression et sont agencés sur un cercle de répartition (2) concentrique à l'axe (5), **caractérisé en ce que** respectivement les surfaces de pression (19) des pistons (3a) et respectivement les surfaces de pression (20) des pistons (3b) peuvent être mutuellement couplées mécaniquement, et le chemin de guidage des pistons (3a, 3b) peut être rallongé.

2. Dispositif d'actionnement selon la revendication 1, **caractérisé en ce qu'**au moins deux anneaux (4a, 4b) agencés concentriquement autour de l'axe (5), entre la pièce de corps de base cylindrique extérieure (9b) et la pièce de corps de base cylindrique intérieure (9a), interagissent avec au moins deux pistons (3a, 3b) agencés autour de l'axe (5), sur le cercle de répartition (2).

3. Dispositif d'actionnement selon la revendication 2, **caractérisé en ce que** l'anneau (4a) peut coulisser axialement sur la pièce de corps de base cylindrique intérieure (9a) par rapport à l'anneau (4b), et l'anneau (4b) peut coulisser axialement sur la pièce de corps de base cylindrique extérieure (9b) par rapport à l'anneau intérieur (4a).

4. Dispositif d'actionnement selon les revendications 1 à 3, **caractérisé en ce que** l'anneau (4a) est en liaison, par sa surface frontale (21), avec la butée de débrayage (6a), et l'anneau (4b) est en liaison, par sa surface frontale (22), avec la butée de débrayage (6b), et les plans des surfaces frontales (21, 22) s'étendent perpendiculairement à l'axe (5) du dispositif de débrayage/embrayage (1).

5. Dispositif d'actionnement selon les revendications 1 à 4, **caractérisé en ce qu'**il existe une relation de dimensionnement entre le diamètre intérieur de l'anneau (4b) respectivement le diamètre extérieur de l'anneau (4a) et le diamètre du cercle de répartition (2).

6. Dispositif d'actionnement selon les revendications 1 à 5, **caractérisé en ce que** les faces frontales des extrémités côté piston des anneaux (4a, 4b) présentent respectivement au moins deux prolongements (7a, 7b) dans la direction axiale, la partie terminale de ceux-ci étant formée par des tampons cylindriques (16a, 16b) et les prolongements (7a, 7b) présentant la même longueur.

7. Dispositif d'actionnement selon les revendications 1 à 6, **caractérisé en ce que** sur les faces frontales côté piston des anneaux (4a, 4b) sont prévus au moins deux évidements (12a, 12b) agencés sur la périphérie, qui, dans la direction axiale, s'étendent sur la largeur des anneaux (4a, 4b), un prolongement (7a, 7b) succédant à chaque fois à un évidement (12a, 12b).

8. Dispositif d'actionnement selon la revendication 7, **caractérisé en ce que** les prolongements (7b) de l'anneau (4b) ont une position correspondante à celle des évidements (12a) de l'anneau (4a) et peuvent être déplacés axialement dans celui-ci.

9. Dispositif d'actionnement selon les revendications 6 à 8, **caractérisé en ce que** les axes de symétrie des tampons (16a, 16b) des prolongements (7a, 7b) sont alignés avec ceux des évidements (12a, 12b) et ceux des pistons (3a, 3b).

10. Dispositif d'actionnement selon les revendications 1, 6 et 9, **caractérisé en ce que** les pistons (3a, 3b) sont d'une configuration creuse et les tampons (16a, 16b) sont en liaison avec les surfaces intérieures de piston (19, 20) .

11. Dispositif d'actionnement selon l'une des revendications 2 à 10, **caractérisé en ce que** la largeur totale des anneaux (4a) et (4b) correspond au diamètre d'un piston (3a, 3b).

12. Dispositif d'actionnement selon les revendications 2 à 11, **caractérisé en ce que** le corps de base (9), les anneaux (4a, 4b) et les pistons (3a, 3b) peuvent être fabriqués en un matériau susceptible d'être coulé ou moulé.
